# EUROPÄISCHE PATENTSCHRIFT

(11) **EP 2 828 018 B1**
(45) Veröffentlichungstag und Bekanntmachung des Hinweises auf die Patenterteilung: **12.09.2018**
(21) Anmeldenummer: 13715600.6
(22) Anmeldetag: 19.03.2013
(51) Int. Cl.: B21K 25/00, B21K 1/44, F16B 31/02

(54) **SENSORISCHES VERBINDUNGSELEMENT UND HERSTELLVERFAHREN**
FASTENER WITH SENSOR AND ITS MANUFACTURING PROCESS
ELEMENT DE FIXATION AVEC CAPTEUR INTÉGRÉ ET SON PROCÉDÉ DE FABRICATION

(30) Priorität: 22.03.2012 DE 102012005614
(43) Veröffentlichungstag der Anmeldung: 28.01.2015
(73) Patentinhaber: GLBS PATENTVERWERTUNGSGESELLSCHAFT GBR, 64380 Roßdorf (DE)
(72) Erfinder: GROCHE, Peter, 64367 Mühltal (DE); BRENNEIS, Matthias, 63776 Mömbris (DE)
(74) Vertreter: Weilnau, Carsten
(86) Internationale Anmeldenummer: PCT/EP2013/000824
(87) Internationale Veröffentlichungsnummer: WO 2013/139464

(56) Entgegenhaltungen:
- DE-A1-102006 007 385
- US-A- 3 589 234

## Beschreibung

### Technisches Gebiet

Die Erfindung betrifft eine Tragstruktur mit der Aufgabe eines Verbindungselementes mit integrierter Sensorik zur Erfassung von Lasten sowie deren Wirkrichtung mit einer Schnittstelle zur Ausgabe von Messgrößen geeignet zur automatisierten Signalverarbeitung. Das Verbindungselement kann beispielsweise eine Schraube, ein Bolzen, eine Gewindestange, ein Niet oder ein Schraubanker sein. Des Weiteren betrifft die Erfindung die Herstellung dieser Anordnung durch eine plastische Formgebung.

### Stand der Technik

In vielen Bereichen der Technik, z.B. im Fahrzeug- oder Maschinenbau sowie im Stahlbau muss beim Verspannen einer Verbindung eine definierte Montagekraft aufgebracht werden um die Betriebssicherheit zu gewährleisten. Um Schäden oder Unfälle zu vermeiden, muss während des gesamten Lebenszyklus der Verbindung eine ausreichende Vorspannkraft erhalten bleiben. Diese kann sich jedoch aufgrund von Betriebslasten, Temperaturwechseln oder Setzungseffekten verändern. Weiterhin kann ein Monitoring der einwirkenden Kräfte, insbesondere auch von Querkräften, zur Überwachung der Verbindung wünschenswert sein. Querkräfte können durch Betriebslasten quer zur Verbindungsachse, d.h. quer zur Längsachse des Verbindungselements auftreten. Um ein ganzheitliches Belastungsmonitoring der Verbindung zu ermöglichen, müssen zumindest Axial- und Querkräfte, ggf. auch weitere Größen wie Temperatur oder Luftfeuchte von der Messanordnung aufgenommen werden. Da Verbindungselemente in vielen Anwendungen genutzt werden, ist die kostengünstige Herstellung eine wichtige Anforderung an diese Produktgattung.

Um die Tragfähigkeit von Verbindungen zu gewährleisten, muss die Vorspannkraft in regelmäßigen Abständen überprüft werden. Dies ist jedoch an handelsüblichen Verschraubungsmitteln nach dem Beenden des Anziehvorgangs aufwändig. Daher ist es in vielen Anwendungsbereichen üblich, dass Personal in regelmäßigen Abständen die Anlage wartet, ohne dass dabei die in den Verspannungsmitteln tatsächlich herrschende Vorspannkraft bekannt ist. Dabei werden entweder alle Verschraubungsmittel mit einer empirisch ermittelten Kraft nachgezogen oder präventiv ausgetauscht und oft mit einem vorgegebenen Anzugsmoment befestigt. Um unnötige Kosten zu vermeiden und die Sicherheit der Verbindung zu erhöhen wäre es daher vorteilhaft, wenn die Wartungsintervalle bedarfsgerecht gesteuert würden. Wartungszyklen in zeitlich fixen Intervallen haben auch den Nachteil, dass die Verbindungen innerhalb der Zyklen versagen könnten. Um bedarfsgerecht reagieren zu können, muss die Axialkraft der Schraube überwacht werden. Dazu sind verschiedene Überwachungsvorrichtungen und Anordnungen bekannt, auf die im Folgenden eingegangen wird.

Generell ist eine differentielle Bauweise, welche als Merkmal das additive Zusammenfügen von Einzelteilen mit gegebenenfalls unterschiedlichen Werkstoffen besitzt, nachteilig im Hinblick auf den Aufwand bei der Herstellung und den daraus resultierenden Kosten. Aus technologischer Sicht weisen die Lehren basierend auf der differentiellen Bauweise oft Nachteile durch viele Einzelteile im Kraftfluss und der daraus resultierenden Nachgiebigkeit sowie Streuungen durch Fertigungstoleranzen der einzelnen Bauteile auf.

Grundsätzlich wird unterschieden, ob die Messelemente oder Messvorrichtungen die Verbindung prüfen, überwachen und/oder protokollieren sollen. Bei verschiedenen Messprinzipien werden die Messwerte im Laufe der Nutzung und Herstellung der Verbindung ausgewertet. Dazu wird eine von der Messanordnung ausgehende Datenübertragung benötigt. Die Eignung zur automatisierten Auswertung hängt von den Ausgangssignalen der Messvorrichtung ab.

Einige Anordnungen sind in der Lage, Veränderungen der Vorspannkraft zu überwachen. So wird in der Erfindung DE 000019854062 C1 vorgeschlagen, die Messwerte extern protokollieren zu lassen. Diese Erfindung besitzt den Nachteil, dass weitere Elemente in der Verbindung verbaut werden müssen, welche eine zusätzliche Nachgiebigkeit erzeugen, besondere Maßnahmen und Aufwände während der Montage erfordern und die Komplexität des Aufbaus hoch ist.

Auch in der WO 2011020454 A1, welche sich allgemein auf eine Vorrichtung zur Bestimmung und/oder Überwachung einer Vorspannkraft einer Schraubverbindung bezieht, erzeugt ein Sensor Daten, die vom Wert der Vorspannkraft und/oder von einer Änderung der Vorspannkraft abhängig und elektronisch verwertbar sind. Bei Nutzung dieser Lehre erweist sich der Aufbau als nicht zufriedenstellend, da Elemente aufwändig zueinander positioniert werden müssen.

Aus der EP 000001764596 A2 ist eine Vorrichtung bekannt, welche die Messergebnisse mittels Funktechnik weitergibt. Durch die bereits vorhandene Datenschnittstelle ist ein solches Verfahren für die automatisierte Auswertung geeignet. Allerdings ist der Messaufbau sehr aufwendig und somit nicht kostengünstig. Zudem ist die Vorrichtung rein auf die Messung der Vorspannung beschränkt.

Die Lehre der US 000004904132 A bedient sich eines optischen Ausgabeverfahrens: Bei Spannungsänderungen innerhalb des Verbindungselementes verfärbt sich ein im Schraubenkopf eingelassenes Anzeigeelement. Hier erweist sich die kontinuierliche Überwachung als problematisch und für optisch abgeschlossene Systeme unmöglich.

In der DE 000004421959 A1 wird vorgeschlagen, die Anlage einer Schraube visuell zu kontrollieren, wodurch die Vorspannung diskret erfasst werden kann. Für die Aufgabe einer kontinuierlichen und automatisierten Auswertung erscheint dieser Lösungsvorschlag nicht geeignet.

Die in US 020020054809 A1 beschriebene Erfindung überwacht die Vorspannkraft basierend auf einer mechanischen Methode mittels Tellerfedern, und im Falle eines Versagens der Schraube gibt sie ein optisch auslesbares Signal aus. Diese Lehre besitzt den Nachteil, dass ein weiteres Element in der Verbindung verbaut werden muss, welches eine zusätzliche Nachgiebigkeit erzeugt, besondere Maßnahmen und Aufwände während der Montage erfordert und die Komplexität des Aufbaus erhöht.

Grundsätzlich können drei verschiedene Anordnungen zur Überwachung der Klemmkraft in einer Verbindung unterschieden werden: Die Verwendung externer Vorrichtungen, zusätzliche Elemente in der Verbindung und die Erfassung der Klemmkraft innerhalb oder direkt am Verbindungselement.

Bekannt sind nicht nur Vorrichtungen um Vorspannkräfte im Betrieb messen zu können, sondern auch solche die während des Anziehvorganges die in der Verbindung herrschende Axialkraft überwachen.

Sobald in Erfindung DE 000019960040 A1 beim Anziehvorgang die gewünschte Kraft erreicht wird, geben die beschriebenen Vorrichtungen ein Signal aus. Nach dem Anziehvorgang werden diese wieder entfernt, und stehen folglich nicht mehr für Messungen am Verbindungselement zur Verfügung.

Zur Überwachung der Klemmkraft durch Vorrichtungen im Betrieb ist aus DE 102005002592 A1 eine Anordnung bekannt, welche die Vorspannkraft des Verschraubungsmittels prüfen kann. Diese bleibt jedoch nicht dauerhaft auf der Schraubverbindung installiert und benötigt außerdem einen Bediener.

Weiterhin wird in EP 000001764596 A2 eine Messvorrichtung beschrieben, welche auf den Schraubenkopf aufgesetzt wird. Aufgrund einer hydraulischen Vorrichtung und eines Messstabes, welcher sich in einer Bohrung innerhalb der Schraube befindet und sich proportional mit der axialen Dehnung bewegt, werden Spannungsänderungen erfasst. Nachteilig sind die Komplexität des Aufbaus sowie die Größe der Vorrichtung, wodurch die Einsatzmöglichkeiten eingeschränkt werden.

Beim Einsatz zusätzlicher Elemente um die Vorspannkraftänderung in Verbindungen zu messen, ist die Sensorik nicht direkt im bzw. am Verbindungselement integriert. DE 000019854062 C1 beschreibt eine Unterlegscheibe, welche entweder zwischen Schraubenkopf und Werkstück oder Schraubenmutter und Werkstück eingesetzt wird. Durch die Dickenänderungen von Dielektrizitätsschichten und den daraus resultierenden Kapazitätsänderungen wird die herrschende Vorspannkraft bestimmt. Diese Erfindung besitzt den Nachteil, dass weitere Elemente in der Verbindung verbaut werden müssen, welche eine zusätzliche Nachgiebigkeit erzeugen, besondere Maßnahmen und Aufwände während der Montage erfordern und die Komplexität des Aufbaus erhöhen.

Ein ähnliches Konzept wird auch in der DE 102009043267 A1 verwendet. Nachteilig ist bei diesen Erfindungen, dass der kapazitive Sensor nicht in der Schraube selbst eingebaut ist, was die Messung verfälschen kann.

In DE 000003934952 A1 wird eine weitere Überwachungsanordnung vorgeschlagen, die einen die Vorspannkraft des Verbindungselementes in der Einbaulage aufnehmenden und an das Verbindungselement angrenzend montierten Kraftsensor enthält. Der Kraftsensor ist in Form einer Federanordnung und einem zugeordneten, federwegabhängigen Schaltkontakt realisiert. Bei Erreichen der Sollvorspannung des Verbindungselementes ist der Schaltkontakt geschlossen. Die Schaltlage wird zur Kontrolle der Vorspannkraft periodisch durch einen elektrischen Prüfkreis überwacht. Diese Erfindung besitzt den Nachteil, dass ein weiteres Element in der Verbindung verbaut werden muss, welches eine zusätzliche Nachgiebigkeit erzeugt, besondere Maßnahmen und Aufwände während der Montage erfordert und die Komplexität des Aufbaus erhöht.

Als vorteilhafter sind daher Anordnungen anzusehen, bei denen Elemente zur Erfassung der Klemmkraft innerhalb oder direkt am Verbindungselement angebracht sind. Ein derartiger Ansatz wird in der DE 102009060441 A1 verfolgt. Nachteil hierbei sind die empfindlichen Schichten an der Oberfläche. Diese können während der Montage oder im Betrieb leicht beschädigt werden was zu Verfälschungen der Messwerte führt.

Auch aus der DE 102004038638 B3 sind Verbindungselemente mit integriertem Sensor zur Ermittlung von Axialkräften bekannt. Ein im Schraubenkopf integrierter Wandler, welcher piezoelektrische Eigenschaften aufweist, emittiert Ultraschallwellen, die am Schraubenende reflektiert werden. Derselbe Wandler dient auch als Sensor, um die emittierten akustischen Signale aufzunehmen. Bei einer Änderung der Axialspannung der Schraube verändert sich die Ultraschallpermeabilität des Werkstoffes, und damit werden Rückschlüsse auf die noch vorhandene Vorspannkraft ermöglicht. Nachteilig ist die Anfälligkeit gegenüber Störeinflüssen aus der Umgebung.

DE 000019710960 A1 beschreibt eine Befestigungsschraube, dadurch gekennzeichnet, dass die Kopfauflagefläche mit einer Piezokeramik, elektrisch isolierenden und elektrisch leitenden Materialien beschichtet ist und die elektrisch leitenden Schichten an einer im verschraubten Zustand zugängliche Stelle kontaktierbar sind, dessen Signale elektronisch weiterverarbeitet werden. Nachteil hierbei sind die empfindlichen Schichten an der Oberfläche. Diese können während der Montage oder im Betrieb leicht beschädigt werden was zu Verfälschungen der Messwerte führt.

Neben den beschriebenen Ansprüchen zur Messung von Axialkräften in Verspannungselementen, sind auch Verfahren und Anordnungen für die Messung von Querkräften bekannt. Dazu kommen in der Regel Kraftmessbolzen zum Einsatz. Dabei wird unterschieden, ob diese Anordnungen in der Lage sein sollen auch die Aufgabe eines Verbindungselementes zu erfüllen.

In EP 000001933121 A2 wird ein Kraftmessbolzen mit integrierter Messsensorik beschrieben. Aufgrund der vielen benötigten Einzelteile und Formelemente handelt es sich allerdings um einen aufwendigen Aufbau.

In der DE 102004038638 B3 wird die Messung mechanischer Spannungen mittels Ultraschallwellen, welche durch Piezoaktoren erzeugt werden, durchgeführt. Die Scherspannung innerhalb des Bolzens verändert die Ultraschallpermeabilität des Werkstoffes, was wiederum einen Rückschluss auf den Spannungszustand ermöglicht.

In einem Bolzen auftretende Scherkräfte können auch alternativ mithilfe von Dehnmesstreifen ermittelt werden, wie in Lehre DE 102005004060 A1 gezeigt. Bei der genannten Anordnung handelt es sich um einen Messbolzen. Der Aufwand bei Anwendung dieser Lehre erscheint für Befestigungsaufgaben unangemessen hoch.

Auch die gattungsgemäße DE 102006007385 A1 erfasst auftretende Scherkräfte in einem Bolzen mithilfe von Dehnmesstreifen und erfüllt dabei keine Verbindungsaufgabe.

Im Sinne der Erfindung geeigneter sind Kraftmessbolzen, die auch die Aufgabe eines Verbindungselementes erfüllen und in der Lage sind Lasten quer zur Verbindungsachse zu erfassen. DE 000010111020 A1 beschreibt ein solches Verbindungselement mit einem Magnetfeld erzeugenden und einem davon beabstandeten magnetisch sensitiven Element. Das vorgeschlagene Verbindungselement eignet sich insbesondere zur Erfassung einer auf den Sitz eines Fahrzeuges einwirkenden Kraft oder mechanischen Spannung. Die Tragfähigkeit dieses Verbindungselementes ist allerdings durch seine Bauart vermindert, da es über weite Bereiche geschlitzt ist.

DE 000010242256 A1 beschreibt einen Kraftmessbolzen, welcher mit einem Gewinde versehen ist und daher als Verschraubungsmittel verwendet werden kann. Zur Kraftmessung wird eine Kraftmessbuchse vorgesehen, welche im elastischen Schraubenschaft integriert ist. Bei einer Scherbelastung entsteht im Schaft eine Zug/Druckspannung, die von der Sensorik erfasst wird. Nachteilig ist der komplexe Aufbau, welcher durch die benötigten Geometrieelemente bedingt ist.

### Aufgabenstellung

Aufgabe der Erfindung ist es, eine Tragstruktur mit Sensoreinheit zu schaffen, die als Verbindungselement mit integrierter Sensorik zur Aufnahme von Axial-und/oder Querlasten beim Verspannen der Verbindung und/oder im Betrieb dienen kann. Dabei soll eine ähnliche Tragfähigkeit wie bei handelsüblichen Befestigungsschrauben erzielt werden. Das Sensorkonzept soll durch Temperatur- und Feuchtesensoren erweitert werden können, um Störeinflüsse auf die Lastmessung zu kompensieren.

Um ein Klaffen der Komponenten im Verbund unter Zugbelastung zu verhindern, soll die Sensoreinheit unter axialer Vorspannung in der Tragstruktur gefügt sein. Des Weiteren soll der Kontaktbereich zwischen Tragstruktur und Sensoreinheit genug Auflagefläche bieten, um den Kraftfluss zwischen den Komponenten sicherzustellen.

Das Messprinzip sowie die übrige Anordnung aus Signalweiterleitung und Schnittstellen sollen in der Lage sein, eine kontinuierliche Signalübertragung zu ermöglichen.

Die erfindungsgemäße Lehre soll ferner dazu dienen, die Tragstruktur mit wenig Aufwand herzustellen. Es soll ein geringer Bauraumbedarf für die Sensorik und deren Vorspannung benötigt werden.

Um den Aufbau bestehend aus Tragstruktur und Sensoreinheit zu realisieren, wird auch ein Herstellverfahren benötigt, welches die Integration der Sensoreinheit sowie die Kraftübertragung zwischen Tragstruktur und Sensoreinheit ermöglicht. Das Herstellverfahren soll die simultane Formgebung der Tragstruktur und die Einbettung der Sensoreinheit ermöglichen.

### Darstellung der Erfindung

Erfindungsgemäß besteht der vorgeschlagene Aufbau im Wesentlichen aus einer längsorientierten Tragstruktur (14) und einer Sensoreinheit (10). Aufgabe der Tragstruktur (14) ist die eines Verbindungselementes. Die Tragstruktur (14) besteht an deren Enden aus einem Gewindebereich (1) sowie einem Kopfteil (7) oder alternativ einem weiteren Gewindebereich (1) oder einem weiteren Kopfteil. Dazu kommt ein elastischer Bereich (2) innerhalb dem die Sensoreinheit (10) integriert ist. Die Sensoreinheit (10) liegt dabei im Nebenkraftfluss der Tragstruktur (14) und ist koaxial im Inneren angeordnet. Um die Vorteile dieses einfachen Aufbaus besser auszunutzen, soll die Sensoreinheit (10) bei dem Herstellungsprozess der Tragstruktur (14) integriert werden. Die Sensoreinheit (10) übernimmt die Aufgabe die im Verbindungselement wirkende axiale Vorspannkraft sowie auftretende Querkräfte zu messen. Um eine kontinuierliche Überwachung zu ermöglichen, werden Ausführungen für die Signalweiterleitung (8) vorgeschlagen. Weiterhin kann das Verbindungselement um einen plastischen Dehnbereich (6) erweitert sein.

Um die Tragstruktur (14) in einem umformtechnischen Herstellverfahren darzustellen, ist es notwendig mit Werkzeugen oder -segmenten in radialer Richtung auf die Tragstruktur (14) einzuwirken, um die Hinterschnitte in axialer Richtung zur Aufnahme der Sensoreinheit (10) im Inneren der Tragstruktur (14) zu erzeugen. Dabei dürfen die Umformkräfte die Beanspruchbarkeit der Sensoreinheit (10) nicht überschreiten. Während der Plastifizierung der Tragstruktur (14) wird die Sensoreinheit (10) derart integriert, dass ein kombinierter Kraft- und Formschluss zwischen Tragstruktur (14) und Sensoreinheit (10) entsteht. Erreicht wird dies durch die resultierenden Eigenspannungen nach dem Umformprozess bei Raumtemperatur und/oder durch zusätzliche lokale oder globale Erwärmung der Tragstruktur (14) von extern und/oder durch Prozesswärme bei der Herstellung der Tragstruktur (14) und der anschließenden Schrumpfung durch Abkühlung, welche blockiert wird durch die entstandenen Hinterschnitte an der Tragstruktur (14) und durch das Vorhandensein der Sensoreinheit (10) an dieser Stelle. Durch den Winkel der Kontaktgeometrie (26) an Sensoreinheit (10) und Tragstruktur (14) können die entstehenden axialen Zugspannungen (19) resultierend aus den Eigenspannungen und die Beanspruchung der Sensoreinheit während des Herstellprozesses geeignet eingestellt werden. Der am besten geeignetste Winkel (26) kann für einen gegebenen Geometrie- und Lastfall mit etablierten Methoden der Mechanik, wie z.B. Finite Elemente Methode, bestimmt werden. Das Verfahren kann zudem die Überlagerung einer Längskraft (25) während des Fügevorganges an der Tragstruktur (14) vorsehen, um die Zugeigenspannungen in der Tragstruktur (19) nach dem Prozess zu erzeugen oder zu verstärken. In der Regel werden die axialen Zugspannungen in der Tragstruktur (14) und damit die Vorspannkräfte für die Sensoreinheit (10) durch axiale Zugspannung (25) während des Fügevorgangs verstärkt.

Die Messwerte können erfindungsgemäß sowohl während des Anziehvorganges der Schraubverbindung genutzt werden als auch im Betrieb. Besonders vorteilhaft ist dabei, dass keine Modifikation am Aufbau vorgenommen werden muss.

Ein weiterer besonderer Vorteil des einfachen Aufbaus ist die Skalierbarkeit der Anordnung. Größen und Messbereiche können somit nach Bedarf angepasst werden, da keine zusätzlichen Elemente notwendig sind.

Die Tragstruktur (14) kann im Inneren durchgehend hohl (9) ausgeführt werden. Dadurch wird die Verformbarkeit der Tragstruktur (14) und somit das Arbeitsvermögen erhöht. Weiterhin erhält der elastische Bereich (2) die Vorspannung im Fall von wechselnden Beanspruchungen. Wird die Tragstruktur (14) im Betrieb oder während des Verspannens der Verbindung mit einer Längskraft in Zugrichtung beaufschlagt, sorgt der elastische Dehnbereich dafür, dass keine unzulässige Längung bzw. Plastifizierung in Längsrichtung auftritt, damit die Vorspannung von Tragstruktur (14) und Sensoreinheit (10) während und nach der Belastung durch die Zugkraft erhalten bleibt.

Die Sensoreinheit (10) besteht aus einem üblichen Aufbau zur Erfassung von Lasten, bekannt aus den einschlägigen Lehrbüchern, wie z.B. Jörg Hoffmann : Handbuch der Messtechnik. Carl Hanser, München 2007 (3. Aufl.). ISBN 978-3-446-40750-3 oder Karl-Heinrich Grote, Jörg Feldhusen (Hrsg.): Dubbel - Taschenbuch für den Maschinenbau. 23. Auflage. Springer, Berlin 2011. Vorgeschlagen wird die Applikation beispielsweise von Dehnmessstreifen auf einem Träger. In ähnlicher Form kann ein Trägerring (17) auch eingebettet in Schutzkappen (16) angeordnet werden. Auch andere Messprinzipien, die eine mechanische Last in eine elektrische Größe wandeln, wie kapazitive, piezoresistive oder piezoelektrische, sind möglich und können das resistive Messprinzip ersetzen. Das Sensorkonzept kann durch Temperatur- und Feuchtesensoren ergänzt werden, um gegebenenfalls Störeinflüsse auf die Lastmessung zu kompensieren. Die Sensoreinheit ist insbesondere zur Erfassung mechanischer und/oder thermischer Messgrößen ausgebildet.

Erfindungsgemäß liegt der Sensorkörper (10) im Nebenkraftfluss des Verbindungselementes und wird somit direkt von Änderungen in den Lastbedingungen der Tragstruktur (14) beeinflusst. Der messtechnische Ort liegt daher in Mitten der Tragstruktur (14). Somit ist die Sensoreinheit auch geschützt. Um die Vorteile des Aufbaus besser auszunutzen, wird die Sensoreinheit (10) kombiniert kraft- und formschlüssig in die Tragstruktur (14) integriert. Somit ist ein sicherer Kraftübertrag zwischen Tragstruktur (14) und Sensoreinheit (10) in Richtung der Verbindungsachse und quer dazu gewährleistet.

Ausführungsbeispiele sind in den Zeichnungen dargestellt und in der nachfolgenden Beschreibung näher erläutert.

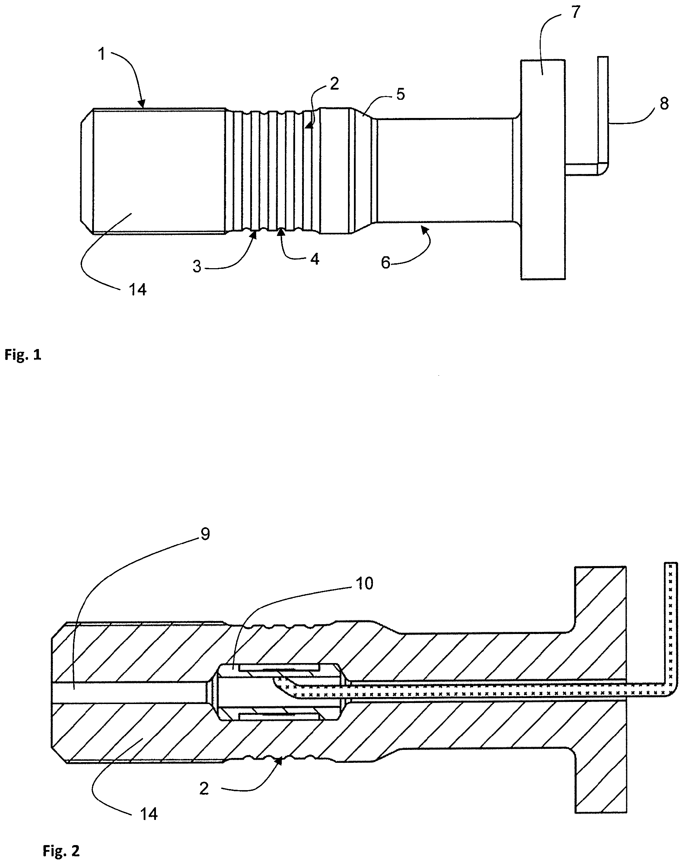

Fig. 1 zeigt die Tragstruktur (14) in der Ausführung mit Kopfteil (7), elastischem (2) und plastischem (6) Dehnbereich verbunden mit einem Übergangsbereich (5) sowie mit einem Gewindebereich (1). Der Kopfteil kann als Befestigungshilfe mit einer Außensechskant-, Innensechskant-, Schlitz-, Kreuzschlitzkontur, oder jeder anderen Innen- und/oder Außenkontur ausgeführt sein. Um die Steifigkeit des Verbindungselementes und somit die Tragfähigkeit zu erhöhen, ist der elastische Bereich abwechselnd mit gekerbten (4) und glatten Bereichen (3) versehen um den Effekt der Kerbverfestigung auszunutzen. Wird die Tragstruktur (14) im Betrieb oder während des Verspannens der Verbindung mit einer Längskraft in Zugrichtung beaufschlagt, sorgt der elastische Dehnbereich dafür, dass keine unzulässige Längung bzw. Plastifizierung in Längsrichtung auftritt, damit die Vorspannung von Tragstruktur (14) und Sensoreinheit (10) während und nach der Belastung durch die Zugkraft erhalten bleibt. Für die Signalübertragung wird eine Kabelverbindung (8) vorgeschlagen.
Fig. 2 stellt den Schnitt der in Fig. 1 beschriebenen Ausführung dar. Das Verbindungselement ist in der Längsachse mit einer Bohrung (9) versehen. Koaxial dazu ist die integrierte Sensoreinheit (10) innerhalb des elastischen Bereichs (2) angeordnet.

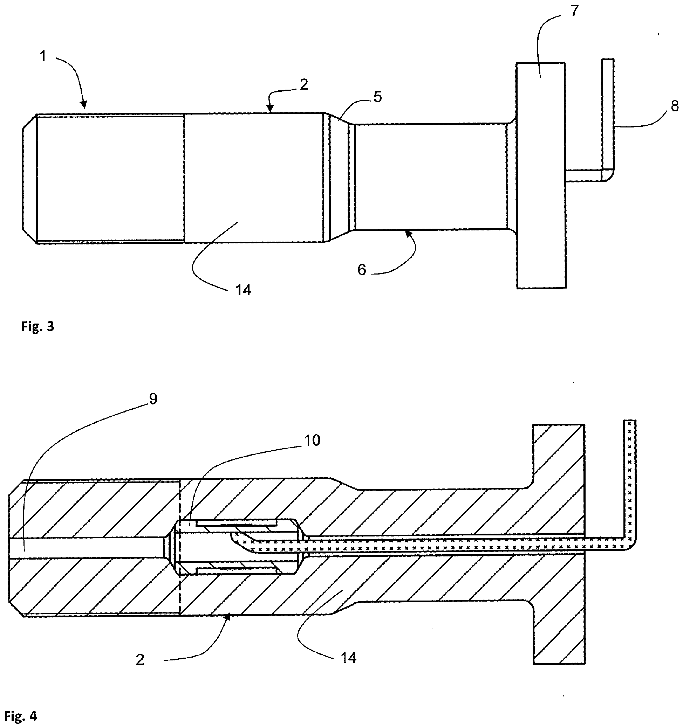

Fig. 3 zeigt die Tragstruktur (14) in der Ausführung mit elastischem (2) und plastischem (6) Dehnbereich verbunden mit einem Übergangsbereich (5), wobei der elastische Dehnbereich (2) nicht gekerbt ist. Die anderen Elemente entsprechen der weiter oben genannten Ausführung.
Fig. 4 stellt den Schnitt der in Fig. 3 gezeigten Ausführung dar. Im Inneren ist der Aufbau identisch zu der in Fig. 2 gezeigten Ausführung.

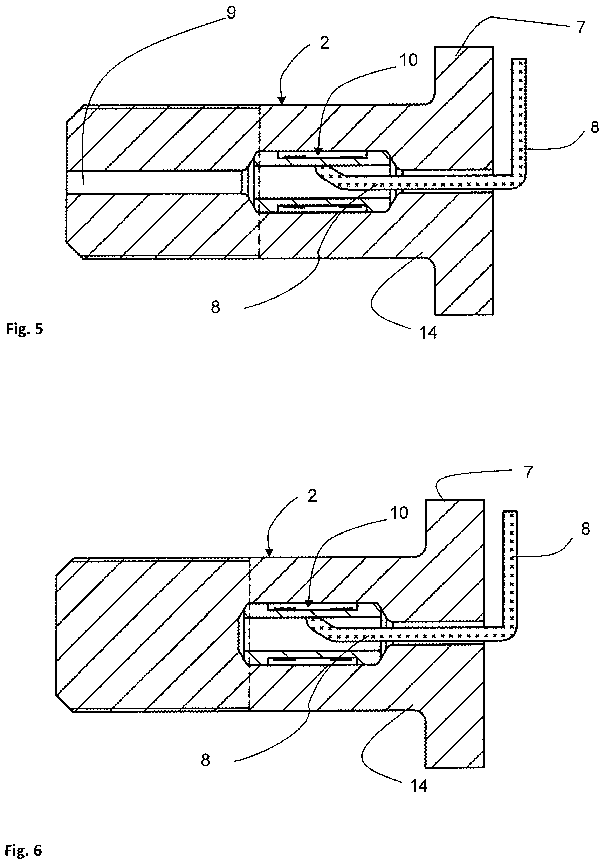

Fig. 5 zeigt die Tragstruktur (14) in der Ausführung mit Kopfteil (7), elastischem (2) Dehnbereich und einem Gewindebereich (1). Das Verbindungselement ist in der Längsachse mit einer Bohrung (9) versehen. Koaxial dazu ist die integrierte Sensoreinheit (10) innerhalb des elastischen Bereichs (2) angeordnet. Die vorgeschlagene Ausführung hebt sich von den weiter oben genannten Ausführungen dadurch ab, dass kein plastischer Dehnbereich vorgesehen ist. Durch die Größe und Beschaffenheit dieser Ausführung, eignet sich diese als Radschraube.
Die in Fig. 6 vorgeschlagene Ausführung hebt sich von den weiter oben genannten Ausführungen dadurch ab, dass die Tragstruktur (14) nur bereichsweise hohl ist. Die Vorform einer solchen Ausführung kann beispielsweise durch das Verfahren Napfrückwärtsfließpressen dargestellt werden.

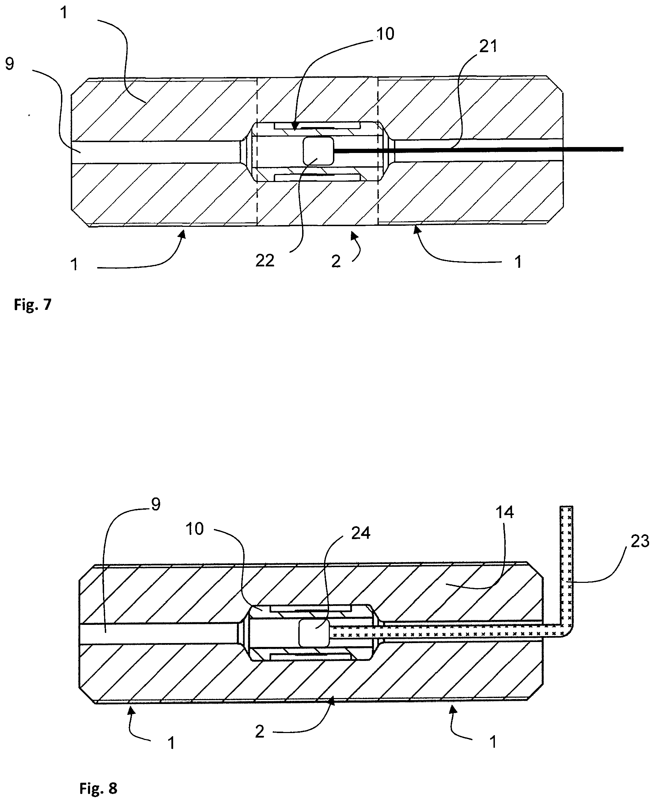

Fig. 7 zeigt die Tragstruktur (14) in der Ausführung mit zwei Gewindebereichen (1) und einem elastischem Dehnbereich (2), wobei der elastische Dehnbereich (2) nicht gekerbt ist. Die anderen Elemente entsprechen der weiter oben genannten Ausführung. Ferner wird zur Signalübertragung eine drahtlose Methode vorgeschlagen. Benötigte Elemente sind eine Schaltung zur Umsetzung der drahtlosen Signale (22) sowie eine Antenne zur Übermittelung (21).
Fig. 8 zeigt die Tragstruktur (14) in der Ausführung mit zwei Gewindebereichen (1) und einem elastischem Dehnbereich (2), wobei der elastische Dehnbereich (2) zur Erhöhung der Tragfähigkeit durch den Effekt der Kerbverfestigung infolge des durchgehenden Gewindes (1) gekerbt ist. Die anderen Elemente entsprechen der weiter oben genannten Ausführung. Ferner wird zur Signalübertragung eine optische Methode vorgeschlagen. Benötigte Elemente sind eine Schaltung für die Wandlung in optische Signale (24) sowie ein Lichtwellenleiter (23).

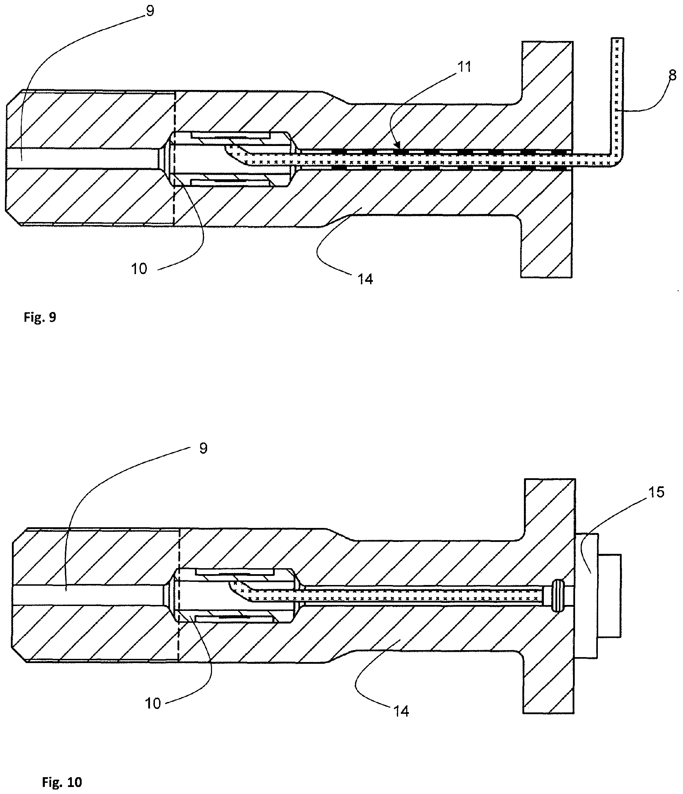

In Fig. 9 ist eine Ausführung gezeigt, bei der die Kabelverbindung für die Signalübertragung (8) mit einer Zugentlastung (11) versehen ist. Die Zugentlastung wird während der Herstellung der Tragstruktur (14) erstellt. Damit wird das Verbindungselement zudem einseitig abgedichtet. Der weitere Aufbau entspricht den weiter oben genannten Ausführungen.
Fig. 10 zeigt eine Ausführung, bei der eine Schnittstelle zur Signalübermittlung (15) am Ende der Tragstruktur (14) eingesetzt wird.

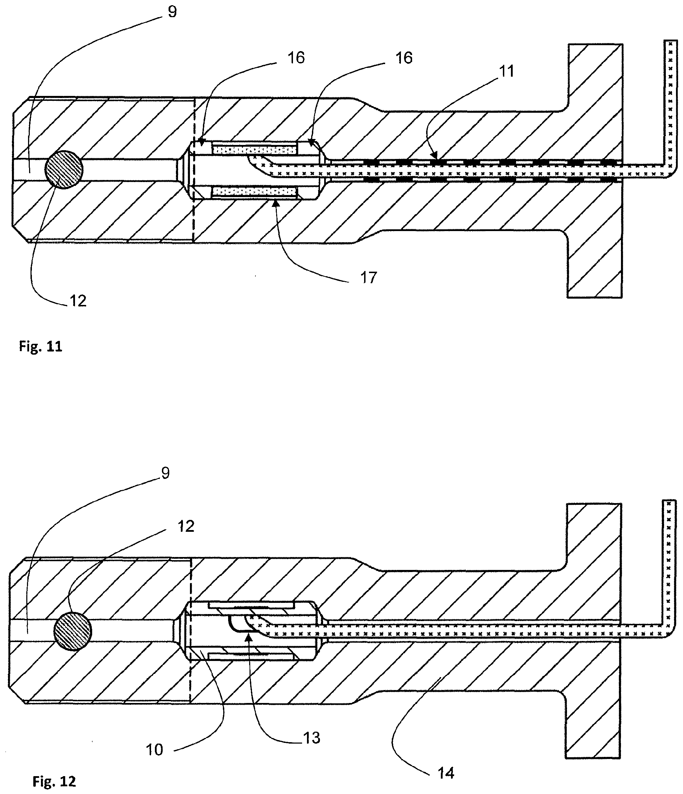

Fig. 11 stellt eine Ausführung dar, bei der zusätzlich im Schraubenende eine Dichtkugel (12) eingesetzt wird. Somit kann das Verbindungselement einseitig, oder, nach den Ausführungen gemäß der Figuren 9 und 10, auch beidseitig abgedichtet werden. Der weitere Aufbau entspricht den weiter oben genannten Ausführungen. Ferner wird vorgeschlagen die Sensoreinheit (10) geteilt aus zwei Schutzkappen (16) und einem Trägerring (17) aufzubauen.

Um thermisch induzierte Messsignale der Sensoreinheit (10) kompensieren zu können, ist nach der Ausgestaltung gemäß Fig. 12 der Einsatz eines Temperatursensors (13) vorgesehen. Dieser misst die Temperaturen auf Höhe der Sensoreinheit (10). Der Aufbau ist geeignet für eine gleichmäßige Erwärmung des Verbindungselementes im Betrieb. Der vorgeschlagene Aufbau kann auch in den weiter oben genannten Ausführungen eingesetzt werden.

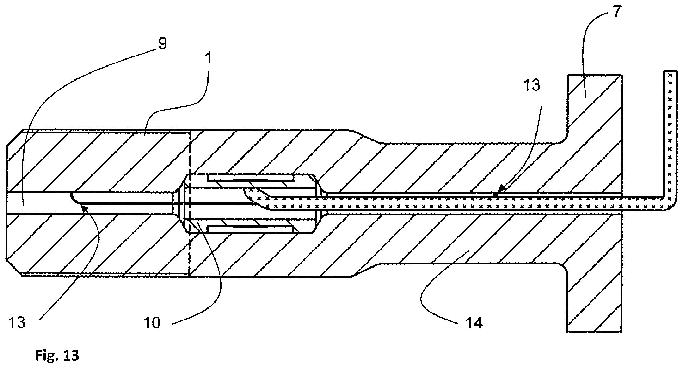

Die Ausgestaltung nach Fig. 13 sieht ähnlich wie die Ausgestaltung gemäß Fig. 12 den Einsatz von Temperatursensoren vor, um den Einfluss thermisch induzierter Messsignale auf die Sensoreinheit (10) kompensieren zu können. Im Falle einer ungleichmäßigen Erwärmung des Verbindungselementes über der Längsachse im Betrieb werden die Temperaturen auf Höhe des Gewindebereichs (1) und auf Höhe des Kopfteils (7) erfasst. Der vorgeschlagene Aufbau kann auch in den weiter oben genannten Ausführungen eingesetzt werden.

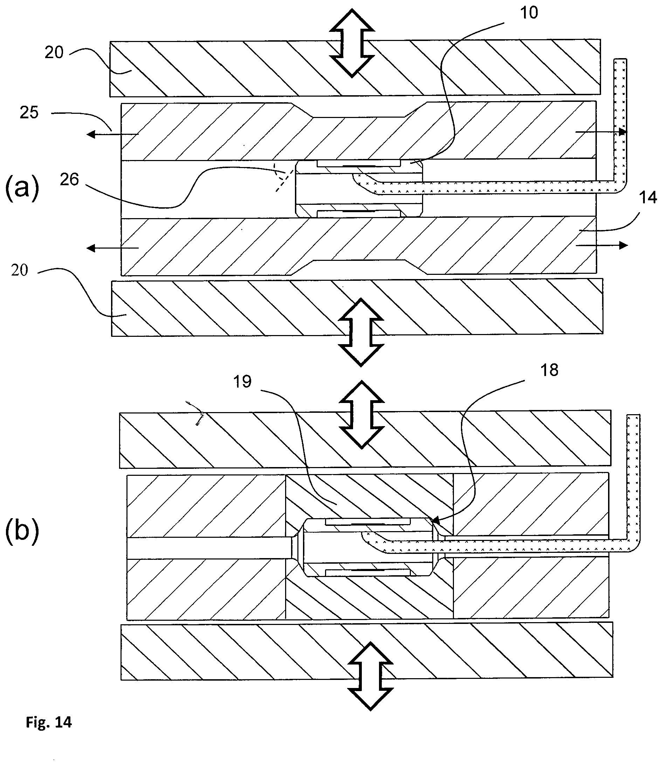

In der Ausgestaltung nach Fig. 14 ist eine Ausgangsgeometrie der Tragstruktur und eine Anordnung von Werkzeugsegmenten (20) vorgesehen, um im Folgenden, wie in Fig. 14 vorgeschlagen, in radialer Richtung auf die Tragstruktur (14) einzuwirken, damit die Hinterschnitte und der Kontaktbereich (18) zur Aufnahme der Sensoreinheit (10) im Inneren der Tragstruktur (14) erzeugt werden. Dieser Prozessablauf ist in analoger weise beispielsweise vom Rundkneten bekannt. Wichtig ist nach dem Prozess das Vorhandensein von axialen Zugspannungen (19) in dem markierten Bereich, eingebracht durch Eigenspannungen infolge der Plastifizierung mit oder ohne überlagerter Längskraft (25) während der Plastifizierung oder/und durch thermisches Schrumpfen der Tragstruktur (14), blockiert durch die entstandenen Hinterschnitte an der Tragstruktur (14) und durch das Vorhandensein der Sensoreinheit (10) an dieser Stelle, um dadurch eine Vorspannung der Sensoreinheit zu erreichen. Auch wichtig ist eine entsprechende Geometrie im Kontaktbereich (18) zwischen Tragstruktur (14) und Sensoreinheit (10) für die Kraftübertragung. Der Kontaktbereich wird insbesondere durch die Ausgangsgeometrie bestimmt. Besonders der Winkel der Kontaktgeometrie (26) an Sensoreinheit (10) und Tragstruktur (14) hat einen Einfluss auf die entstehenden axialen Zugspannungen (19) resultierend aus den Eigenspannungen und auf die Beanspruchung der Sensoreinheit während des Herstellprozesses.

### Bezugszeichenliste

- 1: Gewindebereich
- 2: Elastischer Dehnbereich
- 3: Nicht gekerbter elastischer Dehnbereich
- 4: Gekerbter elastischer Dehnbereich
- 5: Übergangsbereich
- 6: Plastischer Dehnbereich
- 7: Kopfteil
- 8: Kabel zur Signalübermittlung
- 9: Bohrung (Hohlraum in der Schraube)
- 10: Sensoreinheit
- 11: Dichtring
- 12: Dichtkugel
- 13: Temperatursensor
- 14: Tragstruktur
- 15: Schnittstelle zur Signalübermittlung (in der Darstellung nicht geschnitten
- 16: Schutzkappe
- 17: Trägerring
- 18: Kontaktbereich
- 19: Bereich mit axialen Zugeigenspannungen
- 20: Werkzeugsegment
- 21: Antenne
- 22: Schaltung für die drahtlose Datenübertragung
- 23: Lichtwellenleiter
- 24: Schaltung für die Wandlung in optische Signale zur Datenübertragung
- 25: Längskraft
- 26: Winkel der Kontaktgeometrie

## Patentansprüche

1. Verbindungselement bestehend aus einer längsorientierten Tragstruktur (14) und einer Sensoreinheit (10), wobei die Sensoreinheit im Inneren der mindestens bereichsweise hohlen Tragstruktur angeordnet ist, mit einer Signalübertragungseinrichtung verbunden ist und kraftschlüssig mit der Tragstruktur verbunden ist **dadurch gekennzeichnet, dass** die notwendige Kraft für den Kraftschluss durch Eigenspannungen nach einer plastischen Deformation der Tragstruktur während des Fügens von Tragstruktur (14) und Sensoreinheit (10) entstanden ist.

2. Verbindungselement, nach Anspruch 1, **dadurch gekennzeichnet, dass** die Sensoreinheit (10), im Nebenkraftfluss des Verbindungselementes liegt und die Aufnahme von Kräften quer und/oder längs zur Verbindungsachse ermöglicht.

3. Verbindungselement, nach einem der vorangegangenen Ansprüche, **dadurch gekennzeichnet, dass** das Verbindungselement als Schraube oder Gewindestange ausgebildet ist und, dass die Sensoreinheit geeignet ist, die Messwerte (10) über die Signalübertragungseinrichtung zu einer Auswerte- oder Ausgabeeinheit sowohl während des Anziehvorganges der Schraubverbindung als auch im Betrieb zu übertragen, ohne dass Modifikationen am Aufbau vorgenommen werden müssen.

4. Verbindungselement, nach einem der vorangegangenen Ansprüche, **dadurch gekennzeichnet, dass** die Tragstruktur (14) aus einem Kopfteil (7), einem elastischen (2) und einem plastischen (6) Dehnbereich, verbunden mit einem Übergangsbereich (5), sowie aus einem Gewindebereich (1) besteht.

5. Verbindungselement, nach einem der vorangegangenen Ansprüche, **dadurch gekennzeichnet, dass** die Tragstruktur (14) zusätzlich mit einer Zugentlastung (11) für die Kabelverbindung zur Signalübertragung (8) versehen ist.

6. Verbindungselement, nach einem der vorangegangenen Ansprüche, **dadurch gekennzeichnet, dass** die Tragstruktur (14) mit einer Schnittstelle zur Signalübertragung (15) versehen ist.

7. Verbindungselement, nach einem der vorangegangenen Ansprüche, **dadurch gekennzeichnet, dass** die Anordnung zusätzlich um mindestens einen Temperatursensor (13) und/oder sonstigem Sensor an der Sensoreinheit (10) ergänzt wird.

8. Verbindungselement nach einem der vorhergehenden Ansprüche, wobei die Sensoreinheit (10) zur Erfassung mechanischer und/oder thermischer Messgrößen ausgebildet ist.

9. Verfahren zur Herstellung eines Verbindungselementes bestehend aus einer Tragstruktur (14) und einer in der mindestens bereichsweise hohlen Tragstruktur (14) positionierten Sensoreinheit (10), **dadurch gekennzeichnet, dass** mit radial beweglichen Werkzeugsegmenten (20) eine Kraft auf die Tragstruktur in radialer Richtung ausgeübt wird und dabei der Umfang der Tragstruktur (14) in dem Bereich, in dem die Sensoreinheit (10) positioniert ist durch plastische Deformation der Tragstruktur zum Fügen von Tragstruktur (14) und Sensoreinheit (10) reduziert wird.

10. Verfahren nach Anspruch 9, wobei mittels der auf die Tragstruktur radial ausgeübten Kraft der Umfang der Tragstruktur (14) um den Bereich, in dem die Sensoreinheit (10) positioniert ist zumindest teilweise reduziert wird.

11. Verfahren zur Herstellung eines Verbindungselementes nach Anspruch 9 oder 10 **dadurch gekennzeichnet, dass** während des Fügevorganges eine Längskraft (25) an der Tragstruktur (14) überlagert wird.

12. Verfahren zur Herstellung eines Verbindungselementes, nach einem der vorhergehenden Ansprüche 9 bis 11 **dadurch gekennzeichnet, dass** eine Erwärmung der Tragstruktur und/oder eine Kühlung der Sensoreinheit vor der Fügeoperation statt findet.

## Claims

1. Connection element consisting of a longitudinally oriented support structure (14) and a sensor unit (10), wherein the sensor unit is arranged in the inside of the at least partially hollow support structure, is connected to a signal transmission device and is non-positively connected to the support structure, **characterized in that** the required force for the non-positive connection is produced by internal stresses after a plastic deformation of the support structure when joining the support structure (14) and sensor unit (10).

2. Connection element according to claim 1, **characterized in that** the sensor unit (10) is located in the secondary flux of force of the connection element and permits the absorption of forces transversely and/or longitudinally relative to the connection axis.

3. Connection element according to one of the preceding claims, **characterized in that** the connection element is configured as a screw or threaded rod, and **in that** the sensor unit is suitable for transmitting the measurement values (10) via the signal transmission device to an evaluation unit or output unit both during the tightening process of the screw connection and also during operation, without modifications having to be made to the structure.

4. Connection element according to one of the preceding claims, **characterized in that** the support structure (14) consists of a top part (7), a resilient (2) and a plastic (6) expansion region, connected to a transition region (5) as well as a threaded region (1).

5. Connection element according to one of the preceding claims, **characterized in that** the support structure (14) is additionally provided with a strain relief (11) for the cable connection for signal transmission (8).

6. Connection element according to one of the preceding claims, **characterized in that** the support structure (14) is provided with an interface for signal transmission (15).

7. Connection element according to one of the preceding claims, **characterized in that** the arrangement is additionally complemented by at least one temperature sensor (13) and/or other sensor on the sensor unit (10).

8. Connection element according to one of the preceding claims, wherein the sensor unit (10) is configured for detecting mechanical and/or thermal measurement variables.

9. Method for producing a connection element consisting of a support structure (14) and a sensor unit (10) positioned in the at least partially hollow support structure (14), **characterized in that** using radially movable tool segments (20) a force is exerted on the support structure in the radial direction and at the same time the periphery of the support structure (14) is reduced, in the region in which the sensor unit (10) is positioned, by plastic deformation of the support structure in order to join the support structure (14) and sensor unit (10).

10. Method according to Claim 9, wherein by means of the force radially exerted on the support structure, the periphery of the support structure (14) is at least partially reduced around the region in which the sensor unit (10) is positioned.

11. Method for producing a connection element according to Claim 9 or 10, **characterized in that** during the joining process a longitudinal force (25) is superimposed on the support structure (14).

12. Method for producing a connection element, according to one of the preceding Claims 9 to 11, **characterized in that** a heating of the support structure and/or a cooling of the sensor unit takes place before the joining operation.

## Revendications

1. Elément de liaison constitué d'une structure portante (14) orientée en longueur et d'une unité de capteur (10),
l'unité de capteur étant disposée à l'intérieur de la structure portante au moins en partie creuse, étant reliée à un dispositif de transfert de signaux et étant reliée en correspondance mécanique à la structure portante,
**caractérisé en ce que**
la force nécessaire pour la liaison en correspondance mécanique est obtenue par les contraintes propres après déformation plastique de la structure portante pendant la jonction de la structure portante (14) et de l'unité de capteur (10).

2. Elément de liaison selon la revendication 1, **caractérisé en ce que** l'unité de capteur (10) est située dans le parcours des forces secondaires de l'élément de liaison et permet de reprendre des forces transversales et/ou longitudinales par rapport à l'axe de liaison.

3. Elément de liaison selon l'une des revendications précédentes, **caractérisé en ce que** l'élément de liaison est configuré comme vis ou tige filetée et **en ce que** l'unité de capteur convient pour transférer les valeurs de mesure (10) par le dispositif de transfert de signaux vers une unité d'évaluation ou de sortie sans devoir entreprendre des modifications du montage, tant pendant l'opération de serrage de la liaison vissée qu'en fonctionnement.

4. Elément de liaison selon l'une des revendications précédentes, **caractérisé en ce que** la structure portante (14) est constituée d'une partie de tête (7), d'une partie extensible élastique (2) et d'une partie extensible plastique (6) reliée à une partie de transition (5) ainsi que d'une partie filetée (1).

5. Elément de liaison selon l'une des revendications précédentes, **caractérisé en ce que** la structure portante (14) est en plus dotée d'un délestage en traction (11) pour la liaison par câble à la transmission (8) des signaux.

6. Elément de liaison selon l'une des revendications précédentes, **caractérisé en ce que** la structure portante (14) est dotée d'une interface vers la transmission (15) des signaux.

7. Elément de liaison selon l'une des revendications précédentes, **caractérisé en ce que** l'agencement est en outre complété par au moins un capteur de température (13) et/ou un autre capteur disposés sur l'unité de capteur (10).

8. Elément de liaison selon l'une des revendications précédentes, dans lequel l'unité du capteur (10) est configurée pour saisir des grandeurs de mesure mécaniques et/ou thermiques.

9. Procédé de fabrication d'un élément de liaison constitué d'une structure portante (14) et d'une unité de capteur (10) disposée dans la structure portante (14) au moins partiellement creuse,
**caractérisé en ce que**
une force est exercée dans la direction radiale sur la structure portante par des segments d'outil (20) mobiles radialement, la périphérie de la structure portante (14) étant réduite dans la partie dans laquelle l'unité de capteur (10) est positionnée, par déformation plastique de la structure portante en vue de relier la structure portante (14) à l'unité de capteur (10).

10. Procédé selon la revendication 9, dans lequel dans la partie dans laquelle l'unité de capteur (10) est positionnée, la périphérie de la structure portante (14) est réduite au moins en partie au moyen d'une force appliquée radialement sur la structure portante.

11. Procédé de fabrication d'un élément de liaison selon les revendications 9 ou 10, **caractérisé en ce que** pendant l'opération de jonction, une force longitudinale (25) est superposée sur la structure portante (14).

12. Procédé de fabrication d'un élément de liaison selon l'une des revendications 9 à 11 qui précèdent, **caractérisé en ce qu'**un échauffement de la structure portante et/ou un refroidissement de l'unité de capteur ont lieu avant l'opération de jonction.
